# EUROPÄISCHE PATENTANMELDUNG

(11) **EP 2 765 063 A1**
(43) Veröffentlichungstag der Anmeldung: **13.08.2014**
(21) Anmeldenummer: 14000152.0
(22) Anmeldetag: 16.01.2014
(51) Int. Cl.: B62D 21/11, B60G 3/20, B60G 7/00, B60G 7/02

(54) **Radaufhängung für ein Rad einer Achse eines Kraftfahrzeugs**

(30) Priorität: 08.02.2013 DE 102013002247
(71) Anmelder: AUDI AG, 85045 Ingolstadt (DE)
(72) Erfinder: Mohrlock, Dominik, 85053 Ingolstadt (DE); Langhoff, Hans-Jürgen, 85101 Lenting (DE); Goldberg, Ruben, 85049 Ingolstadt (DE); Isliker, Marco, 85049 Ingolstadt (DE)

(57) **Zusammenfassung**

Die Erfindung betrifft eine Radaufhängung (10) für ein Rad (12) einer Achse eines Kraftfahrzeugs, umfassend einen über fünf Radführungselemente (16) gelenkig an einem Hilfsrahmen (100) gelagerten Radträger (14), wobei die Radführungselemente (16) mittels Gummi-Metall-Lager radträgerseitig am Radträger (14) und hilfsrahmenseitig am Hilfsrahmen (100) gelagert sind. Die Erfindung zeichnet sich dadurch aus, dass der Hilfsrahmen (100) über Hilfsrahmenlager (116) elastisch am Kraftfahrzeugaufbau gelagert ist

## Beschreibung

Die Erfindung betrifft eine Radaufhängung für ein Rad einer Achse eines Kraftfahrzeugs gemäß der im Oberbegriff des Patentanspruches 1 angegebenen Art.

Eine Radaufhängung für ein Rad einer Achse eines Kraftfahrzeugs ist in der US 2009/0218783 A1 offenbart. Hierbei sind die Radführungselemente über Gummi-Metall-Lager am Kraftfahrzeugaufbau gelagert. Radträgerseitig sind die Radführungselemente über Kugelgelenke mit dem Radträger verbunden.

Als nachteilig erweist sich hierbei, dass Kugelgelenke verhältnismäßig teuer und verschleißanfällig sind. Zudem reduzieren Kugelgelenke aufgrund ihres schlechten Anfederungsverhalten und ihrer hohen Steifigkeit den Fahrkomfort. Nachteilig ist zudem, dass Kugelgelenke zu einer höheren Längssteifigkeit führen, welche insbesondere den Abrollkomfort weiter einschränkt.

Der Erfindung liegt die Aufgabe zugrunde, eine Radaufhängung für ein Rad einer Achse eines Kraftfahrzeugs gemäß der im Oberbegriff des Patentanspruche 1 angegebenen Art derart weiterzubilden, dass diese kostengünstiger und verschleißunanfälliger ist, und zudem einen höheren Fahrkomfort aufweist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst die Radaufhängung für ein Rad einer Achse eines Kraftfahrzeugs einen über fünf Radführungselemente gelenkig an einem Hilfsrahmen gelagerten Radträger. Die fünf Radführungselemente sind hierbei sowohl radträgerseitig als auch hilfsrahmenseitig mittels Gummi-Metall-Lager am Radträger bzw. am Hilfsrahmen gelagert.

Erfindungsgemäß ist der Hilfsrahmen über Hilfsrahmenlager elastisch am Kraftfahrzeugaufbau gelagert.

Bekanntlich hat eine Fünflenkerachse prinzipbedingt den Nachteil, dass diese eine hohe Längssteifigkeit aufweist.

Da bei der erfindungsgemäßen Fünflenkerachse die radträgerseitigen und hilfsrahmenseitigen Lager aller fünf Radführungselemente als Gummi-Metall-Lager ausgebildet sind und erfindungsgemäß der Hilfsrahmen elastisch am Kraftfahrzeugaufbau gelagert ist, ist in vorteilhafter Weise ein verbessertes Anfederverhalten gewährleistet, was einen höheren Fahrkomfort bedingt.

Die Verwendung von Gummi-Metall-Lager zur radträgerseitigen und hilfsrahmenseitigen Lagerung der Radführungselemente hat zudem den Vorteil, dass nunmehr eine kostengünstigere Herstellung der Radaufhängung gewährleistet ist. Da Gummi-Metall-Lager im Vergleich zu Kugelgelenken weniger verschleißanfällig sind, ist zudem eine höhere Zuverlässigkeit gewährleistet. Ein weiterer Vorteil ist, dass ein höherer Fahrkomfort sichergestellt ist.

Gemäß einer besonders vorteilhaften Ausführungsform der Erfindung sind die Gummi-Metall-Lager als vorgespannte Lager verbaut. Insbesondere sind die Gummi-Metall-Lager vorzugsweise so vorgespannt, dass die Gummi-Metall-Lager, eine einem Kugelgelenk entsprechende radiale Steifigkeit aufweisen. Dies hat den positiven Effekt, dass die Nebenfederrate verringert wird, so dass ein erhöhter Fahrkomfort gewährleistet ist.

Weitere Vorteile, Merkmale und Anwendungsmöglichkeiten der vorliegenden Erfindung ergeben sich aus der nachfolgenden Beschreibung in Verbindung mit dem in der Zeichnungen dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine fünf Radführungselemente aufweisende Radaufhängung für ein Rad einer Achse eines Kraftfahrzeugs, und
- Fig. 2: ein Hilfsrahmen, an dem die fünf Radführungselemente lagerbar sind.

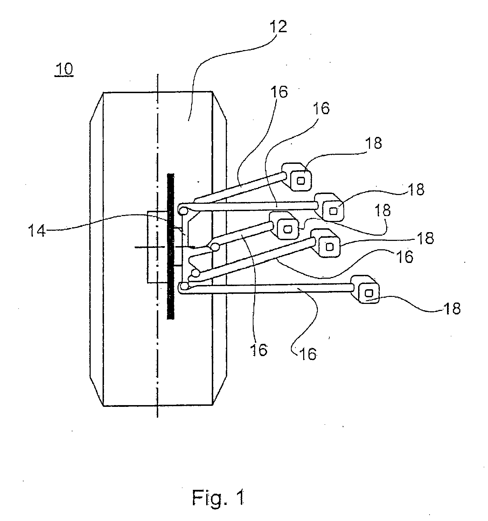

Fig. 1 zeigt eine insgesamt mit der Bezugsziffer 10 bezeichnete Radaufhängung für ein Rad 12 einer Achse eines Kraftfahrzeugs nach dem Stand der Technik.

Wie Fig. 1 zu entnehmen ist, ist der dem Rad 12 zugeordnete Radträger 14 mittels fünf Radführungselemente 16 geführt. Es handelt sich somit vorliegend um eine sogenannte Fünflenkerachse.

Radträgerseitig sind die fünf Radführungselemente 16 mittels Kugelgelenken am Radträger 14 gelagert. Die dem Radträger 14 abgewandten Enden der Radführungselemente 16 sind über Lager 18 an einem - hier aus Gründen der Übersichtlichkeit nicht dargestellten - Hilfsrahmen schwenkbar lagerbar.

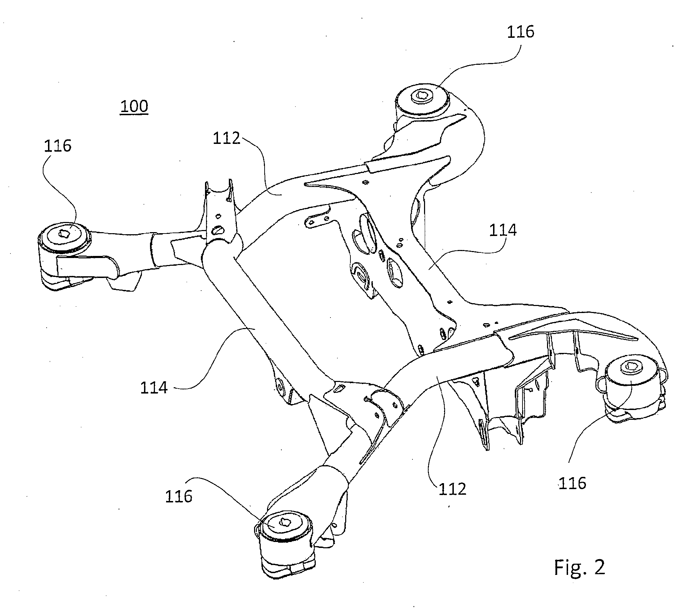

Ein entsprechender Hilfsrahmen 100 ist in Fig. 2 dargestellt. Der Hilfsrahmen 100 weist zwei in Fahrzeuglängsrichtung (x-Richtung) ausgerichtete Längsträger 112 sowie zwei in Fahrzeugquerrichtung (y-Richtung) ausgerichtete Querträger 114 auf. Über vier Hilfsrahmenlager 116 ist der Hilfsrahmen 100 an einer Fahrzeugkarosserie festlegbar.

Prinzipbedingt hat eine Fünflenkerachse den Nachteil einer hohen Längssteifigkeit. Dies wird durch den Einsatz der radträgerseitig verbauten Kugelgelenken noch zusätzlich verstärkt.

Hier nun setzt die Erfindung ein:
Erfindungsgemäß sind die Radführungselemente 16 nun radträgerseitig und hilfsrahmenseitig mittels Gummi-Metall-Lager am Radträger 14 bzw. am Hilfsrahmen 100 gelagert. Zudem ist der Hilfsrahmen 100 über die Hilfsrahmenlager 116 elastisch an der Fahrzeugkarosserie gelagert.

Der erfindungsgemäße Ausbildung der radträgerseitigen und hilfsrahmenseitigen Lager als Gummi-Metall-Lager bei allen fünf Radführungselementen 16 in Kombination mit der über die Hilfsrahmenlager 116 realisierte elastische Lagerung des Hilfsrahmens, führt in vorteilhafter Weise zu einem höheren Fahrkomfort, da das Anfederverhalten verbessert ist.

Bei den hier verbauten Gummi-Metall-Lagern handelt es sich zudem um hoch vorgespannte, das heißt, kalibrierte Gummi-Metall-Lager. Diese sind derart vorgespannt, dass diese eine ähnlich hohe radiale Steifigkeit wie ein entsprechendes Kugelgelenk aufweisen. Hierdurch ist in vorteilhafter Weise sichergestellt, dass auch hohe Nebenfederraten verringert werden.

Zusammenfassend zeichnet sich die erfindungsgemäße Radaufhängung dadurch aus, dass diese günstiger, leichter, weniger verschleißanfällig und einen höheren Komfort aufweisen.

### Bezugszeichenliste

- 10: Radaufhängung
- 12: Rad
- 14: Radträger
- 16: Radführungselement
- 18: hilfsrahmenseitige Lager
- 100: Hilfsrahmen
- 112: Längsträger
- 114: Querträger
- 116: Hilfsrahmenlager

## Patentansprüche

1. Radaufhängung (10) für ein Rad (12) einer Achse eines Kraftfahrzeugs, umfassend einen über fünf Radführungselemente (16) gelenkig an einem Hilfsrahmen (100) gelagerten Radträger (14), wobei die Radführungselemente (16) mittels Gummi-Metall-Lager radträgerseitig am Radträger (14) und hilfsrahmenseitig am Hilfsrahmen (100) gelagert sind, **dadurch gekennzeichnet, dass** der Hilfsrahmen (100) über Hilfsrahmenlager (116) elastisch am Kraftfahrzeugaufbau gelagert ist.

2. Radaufhängung (10) nach Anspruch 1, **dadurch gekennzeichnet, dass** die Gummi-Metall-Lager als vorgespannte Lager verbaut sind.

3. Radaufhängung (10) nach Anspruch 2, **dadurch gekennzeichnet, dass** die Gummi-Metall-Lager derart vorgespannt sind, dass die Gummi-Metall-Lager eine einem Kugelgelenk entsprechende radiale Steifigkeit aufweisen.
